# EUROPÄISCHE PATENTSCHRIFT

(11) **EP 2 121 832 B1**
(45) Veröffentlichungstag und Bekanntmachung des Hinweises auf die Patenterteilung: **27.07.2011**
(21) Anmeldenummer: 07857666.7
(22) Anmeldetag: 17.12.2007
(51) Int. Cl.: C08J 9/224, C08L 25/06, C08K 5/103, C08K 5/098, C08K 3/34

(54) **EXPANDIERBARE STYROLPOLYMERISATE UND SCHAUMSTOFFE MIT VERRINGERTER WASSERAUFNAHME**
EXPANDABLE STYRENE POLYMERS AND FOAMS WITH DECREASED WATER ABSORPTION
POLYMÉRISATS DE STYRÈNE EXPANSIBLES ET MOUSSES AYANT UNE ABSORPTION D'EAU RÉDUITE

(30) Priorität: 18.12.2006 EP 06126365
(43) Veröffentlichungstag der Anmeldung: 25.11.2009
(73) Patentinhaber: BASF SE, 67056 Ludwigshafen (DE)
(72) Erfinder: BRAUN, Frank, 67063 Ludwigshafen (DE); KELLER, Angelika, 67459 Böhl-Iggelheim (DE); DEMBEK, Gerhard, 67098 Bad Dürkheim (DE); AUENMÜLLER, Jürgen von, 68749 Oberhausen-Rheinhausen (DE)
(86) Internationale Anmeldenummer: PCT/EP2007/064035
(87) Internationale Veröffentlichungsnummer: WO 2008/074764

(56) Entgegenhaltungen:
- EP-A- 0 915 127
- DE-A1- 19 530 548
- DE-A1-102005 005 494
- DE-C1- 19 541 725

## Beschreibung

Die vorliegende Erfindung betrifft ein expandierbares Styrolpolymerisat, welches athermane Partikel enthält und mit einem Hydrophobierungsmittel beschichtet ist, ein Verfahren zur Herstellung dieses expandierbaren Styrolpolymerisates, Schaumstoffe, herstellbar aus dem erfindungsgemäßen Styrolpolymerisat, die Verwendung eines Hydrophobierungsmittels zur Beschichtung von expandierbarem Styrolpolymerisat, welches athermane Partikel enthält und zur Erniedrigung der Wasseraufnahme eines aus dem expandierbaren Styrolpolymerisat hergestellten Schaumstoffes, sowie die Verwendung des erfindungsgemäßen Styrolpolymerisates zur Wärmedämmung, zur thermischen Isolierung von Maschinen und Haushaltsgeräten und als Verpackungsmaterial.

In vielen Einsatzgebieten von Polystyrolschaumstoffen kommt es zu einer Einwirkung von Wasser auf diese Schaumstoffe. Dabei kann es zu einem Eindringen von Feuchtigkeit in das Innere des Schaumstoffes kommen, was jedoch bei zahlreichen Anwendungen nachteilig ist. Besonders kritisch sind Anwendungen wie beispielsweise die Perimeterdämmung, bei der neben einer geringen Wasseraufnahme auch ein gutes Wärmedämmvermögen der eingesetzten Schaumstoffe wichtig ist. Polystyrolpartikel-Schaumstoffe sind seit langer Zeit bekannt und haben sich auf vielen Gebieten bewährt. Die Herstellung derartiger Schaumstoffe erfolgt durch Aufschäumen (Vorschäumen) von mit Treibmitteln imprägnierten expandierbaren Polystyrol-Partikeln (EPS-Partikeln) und das nachfolgende Verschweißen der so hergestellten Schaumpartikel zu Formkörpern. Ein wesentliches Einsatzgebiet dieser Schaumstoffe ist die Wärmedämmung im Bauwesen.

Expandierbare Polystyrolpartikel und daraus hergestellte Schaumstoffe sind aus dem Stand der Technik bereits bekannt.

EP 0 915 127 A2 offenbart expandierbare Styrolpolymerisate, welche die athermanen Partikel in einer homogenen Verteilung und ein Hydrophobierungsmittel als Beschichtung enthalten. Diese expandierbaren Styrolpolymerisate können zu selbstverlöschenden Schaumstoffen mit einer Dichte von ≤ 35 g/l verarbeitet werden. Die teilchenförmigen, expandierbaren Styrolpolymerisate sind mit 0,001 bis 0,5 Gew.-% eines Hydrophobierungsmittels beschichtet. Das Hydrophobierungsmittel ist ausgewählt aus der Gruppe bestehend aus Paraffinwachsen mit 10 bis 30 Kohlenstoffatomen in der Kohlenstoffkette, harzartigen Umsetzungsprodukten von N-Methylolamin mit einem Fettsäurederivat, Polyfluoralkyl-(meth)acrylaten, Carboxylaten von Aluminium, Zirkonium und Hafnium in Form von wässrigen Lösungen und Imidazolidonen. Das genannte Dokument offenbart keine speziell abgestimmten Hydrophobierungemittelmischungen auf Basis von Glycerinestern, Metallstearaten und Silicaten.

EP 0 981 574 B1 offenbart Graphitpartikel enthaltende, expandierbare Styrolpolymerisate. Diese Graphitpartikel liegen in einer Menge von 0,05 bis 8 Gew.-% mit einer mittleren Partikelgröße von 1 bis 50 µm in homogener Verteilung in dem expandierbaren Styrolpolymerisat vor. Die genannte Schrift offenbart auch, dass die expandierbaren Partikel mit den üblichen und bekannten Beschichtungsmitteln beschichtet werden können, wobei diese Beschichtungsmittel allgemein ausgewählt sind aus Metallstearaten, Glycerinestern und hydrophoben Silicaten. Spezielle Mischungen werden in diesem Dokument nicht genannt.

DE 195 41 725 C1 offenbart expandierbare Styrol-Perlpolymerisate und daraus hergestellte Schaumstoffe mit verminderter Wasseraufnahmefähigkeit. Diese Styrol-Perlpolymerisate sind mit einem Hydrophobierungsmittel beschichtet, welches aus Glycerintristearat, einem hydrophoben Silicat und gegebenenfalls Zinkstearat und Glycerinmonostearat besteht. DE 195 41 725 A1 offenbart nicht, dass in dem expandierbaren Styrol-Perlpolymerisat athermane Partikel vorliegen können.

DE 10 2005 005 494 A1 offenbart flammgeschützte, expandierbare Styrolpolymergranulate mit Flammschutzsynergisten in der Beschichtung. Die Beschichtung enthält beispielsweise 0,25 % Glycerinmonostearat; 0,25 % Glycerintristearat, 0,12 % feinteilige Kieselsäure und 0,15 % Zink-Stearat.

Aufgabe der vorliegenden. Erfindung ist es, ein expandierbares Styrolpolymerisat bereitzustellen, welches zu einem Schaumstoff verarbeitet werden kann, der neben einer sehr geringen Wärmeleitfähigkeit eine niedrige Wasseraufnahmefähigkeit aufweist. Dieses expandierbare Styrolpolymerisat soll eine geringe Verklebungsneigung beim Vorschäumen aufweisen. Aufgabe ist es weiterhin, ein Verfahren zur Herstellung dieses expandierbaren Styrolpolymerisates, sowie Schaumstoffe, herstellbar aus dem erfindungsgemäßen Styrolpolymerisat bereit zu stellen. Diese Schaumstoffe sollen zur Wärmedämmung geeignet sein.

Diese Aufgabe wird gelöst durch ein expandierbares Styrolpolymerisat, welches athermane Partikel enthält und mit einem Hydrophobierungsmittel beschichtet ist, wobei das Hydrophobierungsmittel
10 bis 90 Gew.-% wenigstens eines Triesters wenigstens einer Fettsäure mit einem mehrwertigen Alkohol als Komponente A,
5 bis 70 Gew.-% wenigstens eines Monoesters einer Fettsäure mit einem mehrwertigen Alkohol als Komponente B,
30 bis 55 Gew.-% wenigstens eines Metallsalzes einer Fettsäure als Komponente C,
5 bis 50 Gew.-% wenigstens eines Silicats als Komponente D,
enthält, und die Summe der Komponenten A bis D des Hydrophobierungsmittels 100 Gew.-% beträgt.

Des Weiteren wird die Aufgabe gelöst durch ein Verfahren zur Herstellung von expandierbarem Styrolpolymerisat durch Beschichten eines expandierbaren Styrolpolymerisates, welches athermane Partikel enthält, mit einem. Hydrophobierungsmittel, wobei das Hydrophobierungsmittel die oben definierte Zusammensetzung aufweist.

Die Aufgabe wird auch gelöst durch die Verwendung eines Hydrophobierungsmittels mit der oben definierten Zusammensetzung zur Beschichtung von expandierbaren, athermane Partikel enthaltenden Styrolpolymerisaten und zur Erniedrigung der Wasseraufnahme eines Schaumstoffes, hergestellt aus dem expandierbaren Styrolpolymerisat.

Die Aufgabe wird auch gelöst durch einen Schaumstoff, der aus dem erfindungsgemäßen expandierbaren Styrolpolymerisat herstellbar ist.

Die Aufgabe wird auch gelöst durch die Verwendung dieses erfindungsgemäßen Schaumstoffs zur Wärmedämmung, zur thermischen Isolierung von Maschinen und Haushaltsgeräten und als Verpackungsmaterial.

Die erfindungsgemäßen Styrolpolymerisate weisen ein Hydrophobierungsmittel auf, welches die vier Komponenten A bis D in einer erfindungsgemäßen Kombination enthält. Diese erfindungsgemäße Kombination verleiht den expandierbaren Polymerisatpartikeln eine sehr geringe Verklebungsneigung beim Vorschäumen, so dass ihre Verarbeitbarkeit verbessert ist. Des Weiteren nehmen aus den expandierbaren Polymerisatpartikeln hergestellte Schaumstoffe sehr wenig Wasser auf, so dass sie für Anwendungen, bei denen sie mit Wasser in Berührung kommen, besonders geeignet sind.

Die erfindungsgemäßen expandierbaren Styrolpolymerisate sind in einer bevorzugten Ausführungsform Styrolhomopolymere oder Styrolcopolymere mit bis zu 20 Gew.-%, bezogen auf das Gewicht der Polymers, wenigstens eines weiteren ethylenisch ungesättigten Monomers, insbesondere Alkylstyrole, beispielsweise Divinylbenzol oder α-Methylstyrol oder Acrylnitril. Auch Blends aus Polystyrol mit anderen Polymeren, insbesondere mit Kautschuk und Polyphenylenether, sind möglich.

Die Styrolpolymerisate können die üblichen und bekannten Hilfsmittel und Zusatzstoffe enthalten, beispielsweise Flammschutzmittel, Keimbildner, UV-Stabilisatoren, Kettenüberträger, Treibmittel, Weichmacher und/oder Antioxidantien.

Die Menge der eingesetzten athermanen Partikel richtet sich nach deren Art und Wirkung. Die expandierbaren Styrolpolymerisate enthalten bevorzugt 0,05 bis 8 Gew.-%, besonders bevorzugt 0,1 bis 6 Gew. -% athermane Partikel, jeweils bezogen auf das Styrolpolymerisat. Bevorzugt werden als athermane Partikel solche ausgewählt aus der Gruppe bestehend aus Graphit, Russ, Aluminium und Mischungen davon, bevorzugt mit einer mittleren Teilchengröße im Bereich von 1 bis 50 µm eingesetzt.

Der bevorzugt eingesetzte Graphit hat vorzugsweise eine mittlere Partikelgröße von 1 bis 50 µm, insbesondere von 2,5 bis 12 µm, ein Schüttgewicht von 100 bis 500 g/l und eine spezifische Oberfläche von 5 bis 20 m²/g. Es kann Naturgraphit oder gemahlener synthetischer Graphit eingesetzt werden. Die Graphitpartikel sind im Styrolpolymerisat vorzugsweise in Mengen von 0,05 bis 8 Gew. -%, insbesondere von 0,1 bis 6 Gew.-% enthalten.

In einer bevorzugten Ausführungsform der Erfindung enthält das expandierbare Styrolpolymerisat Flammschutzmittel, insbesondere solche auf Basis organischer Bromverbindungen. Die organischen Bromverbindungen sollen einen Bromgehalt von ≥ 70 Gew.-% aufweisen. Diese Menge an Flammschutzmitteln führt zu keinerlei Beeinträchtigung der mechanischen Kennwerte der erfindungsgemäßen Polystyrolpartikel-Schaumstoffe. Insbesondere geeignet sind aliphatische, cycloaliphatische und aromatische Bromverbindungen, wie Hexabromcyclododecan, Pentabrommonochlorcyclohexan, Pentabromphenylallylether und Mischungen davon.

Die Wirkung der bromhaltigen Flammschutzmittel wird durch Zusatz von C-C- oder O-O-labilen organischen Verbindungen erheblich verbessert. Beispiele solcher Flammschutzsynergisten sind Dicumyl und Dicumylperoxid. Eine bevorzugte Kombination besteht aus 0,6 bis 5 Gew.-% organischer Bromverbindungen und 0,1 bis 1,0 Gew.-% der C-C- oder O-O-labilen organischen Verbindungen.

Die Einarbeitung der athermanen Partikel in die EPS-Partikel kann nach unterschiedlichen Verfahren erfolgen. Bei einer bevorzugten Ausführungsform vermischt man die athermanen Partikel mit einer Schmelze des Styrolpolymerisates, vorzugsweise in einem Extruder. Dabei wird der Schmelze gleichzeitig das Treibmittel zudosiert. Man kann die athermanen Partikel auch in eine Schmelze von treibmittelhaltigem Styrolpolymerisat einarbeiten, wobei zweckmäßigerweise ausgesiebte Randfraktionen eines Perlspektrums von bei einer Suspensionspolymerisation entstandenen treibmittelhaltigen Polystyrolperlen eingesetzt werden. Die Treibmittel und athermane Partikel enthaltende Polystyrolschmelze wird ausgepresst und zu treibmittelhaltigem Granulat zerkleinert. Da insbesondere Graphit stark nukleierend wirkt, sollte nach dem Auspressen unter Druck rasch abgekühlt werden, um ein Aufschäumen zu vermeiden. Man führt daher zweckmäßigerweise eine Unterwassergranulierung unter Druck durch.

Es ist auch möglich, den Styrolpolymerisaten, die athermane Partikel enthalten, das Treibmittel in einem gesonderten Verfahrensschritt zuzusetzen. Hierbei werden die Granulate vorzugsweise in wässriger Suspension mit dem Treibmittel imprägniert.

Die athermanen Partikel können der Polymerschmelze direkt zugesetzt werden. Man kann die Partikel auch in Form eines Konzentrats in dem entsprechenden Polymer, bevorzugt Polystyrol, der Schmelze zusetzen. Bevorzugt werden aber Polymergranulat, insbesondere Polystyrolgranulat, und athermane Partikel zusammen in einen Extruder gegeben, das Polymer aufgeschmolzen und mit den Partikeln vermischt.

Es ist grundsätzlich auch möglich, die athermanen Partikel bereits im Verlauf der Suspensionspolymerisation zu inkorporieren. Sie können hierbei vor der Suspendierung den Styrolmonomeren zugesetzt oder im Verlaufe, bevorzugt während der ersten Hälfte des Polymerisationscyclus, dem Reaktionsansatz zugefügt werden. Das Treibmittel wird bevorzugt im Verlaufe der Polymerisation zugegeben, es kann jedoch auch hinterher dem Styrolpolymerisat zugegeben werden. Für die Stabilität der Suspension ist es günstig, wenn bei Beginn der Suspensionspolymerisation eine Lösung von Polystyrol, bzw. einem entsprechenden Styrolcopolymerisat, in Styrol, bzw. der Mischung von Styrol und dem oder den entsprechenden Comonomeren, vorliegt. Bevorzugt geht man dabei von einer Lösung von Polystyrol in Styrol, wobei die Konzentration des Polymers in dem Monomer im Allgemeinen 0,5 bis 30 Gew.-%, bevorzugt 5 bis 20 Gew.-% beträgt, aus. Man kann dabei frisches Polystyrol in Monomeren auflösen, zweckmäßigerweise setzt man aber so genannte Randfraktionen ein, die bei der Auftrennung des bei der Herstellung von expandierbarem Polystyrol anfallenden Perlspektrums als zu große oder zu kleine Perlen ausgesiebt werden. In der Praxis weisen derartige nicht verwendbare Randfraktionen Durchmesser von größer als 2,0 mm bzw. kleiner als 0,2 mm auf. Auch Polystyrol-Recyclat und Polystyrol-Schaumstoff-Recyclat können eingesetzt werden. Eine andere Möglichkeit besteht darin, dass man Styrol in Substanz bis zu einem Umsatz von 0,5 bis 70% vorpolymerisiert und das Vorpolymerisat zusammen mit den athermanen Partikeln in der wässrigen Phase suspendiert und auspolymerisiert.

Das Treibmittel wird in den üblichen Mengen von etwa 3 bis 10 Gew.-% bezogen auf das Gewicht des Polymeren, zugesetzt. Als Treibmittel eingesetzt werden üblicherweise aliphatische Kohlenwasserstoffe mit 3 bis 10, vorzugsweise 4 bis 6 Kohlenstoffatomen, beispielsweise n-Pentan, iso-Pentan oder Mischungen davon.

In dem erfindungsgemäßen Styrolpolymerisat liegt in einer bevorzugten Ausführungsform das Hydrophobierungsmittel in einer Menge von 0,001 bis 0,5 Gew.-%, besonders bevorzugt 0,01 bis 0,4 Gew.-%, jeweils bezogen auf das Styrolpolymerisat, vor.

Das erfindungsgemäß eingesetzte Hydrophobierungsmittel enthält im Allgemeinen
10 bis 90 Gew.-% wenigstens eines Triesters wenigstens einer Fettsäure mit einem mehrwertigen Alkohol als Komponente A,
5 bis 70 Gew.-% wenigstens eines Monoesters einer Fettsäure mit einem mehrwertigen Alkohol als Komponente B,
30 bis 55 Gew.-% wenigstens eines Metallsalzes einer Fettsäure als Komponente C,
5 bis 50 Gew.-% wenigstens eines Silicats als Komponente D,
wobei die Summe der Komponenten A bis D des Hydrophobierungsmittels 100 Gew.-% beträgt.

In einer bevorzugten Ausführungsform der vorliegenden Erfindung enthält das Hydrophobierungsmittel
20 bis 60 Gew.%, besonders bevorzugt 25 bis 50 Gew.-%, wenigstens eines Triesters wenigstens einer Fettsäure mit einem mehrwertigen Alkohol als Komponente A,
5 bis 50 Gew.-%, besonders bevorzugt 5 bis 30 Gew.-%, wenigstens eines Monoesters einer Fettsäure mit einem mehrwertigen Alkohol als Komponente B,
30 bis 55 Gew.-% wenigstens eines Metallsalzes einer Fettsäure als Komponente C und
5 bis 30 Gew.-%, besonders bevorzugt 10 bis 20 Gew.-%, wenigstens eines Silicats als Komponente D,
wobei die Summe der Komponenten A bis D des Hydrophobierungsmittels 100 Gew.-% beträgt.

In einer weiteren bevorzugten Ausführungsform besteht das eingesetzte Hydrophobierungsmittel aus den oben angegebenen Komponenten A bis D in den oben angegebenen Mengen.

### Komponente A:

Triester wenigstens einer Fettsäure mit einem mehrwertigen Alkohol bedeutet, dass ein mehrwertiger Alkohol, der wenigstens drei Hydroxyfunktionalitäten aufweist, über drei dieser Hydroxyfunktionalitäten jeweils mit einer Fettsäure verestert ist. Dabei ist es erfindungsgemäß möglich, dass alle drei Hydroxyfunktionalitäten mit Molekülen von drei verschiedenen Fettsäuren verestert sind, oder dass zwei oder drei Hydroxyfunktionalitäten jeweils mit einem Molekül der gleichen Fettsäure verestert sind. Erfindungsgemäß bevorzugt ist, dass alle drei Hydroxyfunktionalitäten des mehrwertigen Alkohols jeweils mit einem Molekül der gleichen Fettsäure verestert sind.

Mehrwertige Alkohole mit wenigstens drei Hydroxyfunktionalitäten sind ausgewählt aus der Gruppe bestehend aus Glycerin, Trimethylolpropan, Pentaerythrit, Sacchariden und Mischungen davon. Besonders bevorzugt ist Glycerin.

Erfindungsgemäß können alle dem Fachmann bekannten gesättigten und ungesättigten Fettsäuren mit 8 bis 28, bevorzugt 12 bis 25, Kohlenstoffatomen eingesetzt werden. Sie können unverzweigt oder verzweigt, sowie aliphatisch, cycloaliphatisch oder aromatisch sein. Aromatische Fettsäuren sind weniger bevorzugt. Bevorzugt werden gesättigte Fettsäuren eingesetzt.

Beispiele für gesättigte Fettsäuren, die in dem erfindungsgemäß eingesetzten Glycerintriester vorliegen sind Pelargonsäure (C₈H₁₇COOH), Caprinsäure (C₉H₁₉COOH), Undecylsäure (C₁₁H₂₁COOH), Laurinsäure (C₁₁H₂₃COOH), Myristinsäure (C₁₃H₂₇COOH), Palmitinsäure (C₁₅H₃₁COOH), Margarinsäure (C₁₆H₃₃COOH), Stearinsäure (C₁₇H₃₅COOH), Arachinsäure (C₁₉H₃₉COOH), Behensäure (C₂₁H₄₃COOH), Lignocerinsäure (C₂₃H₄₇COOH), Ricinolsäure (C₁₇H₃₂(OH)COOH) und Cerotinsäure (C₂₅H₅₁COOH). Besonders bevorzugt wird Stearinsäure eingesetzt. Somit wird besonders bevorzugt Glycerintristearat als Komponente A eingesetzt. Triester von Glycerin können nach dem Fachmann bekannten Methoden hergestellt werden, beispielsweise durch sauer oder basisch katalysierte Umsetzung der entsprechenden Menge Fettsäure mit Glycerin.

Beispiele für ungesättigte Fettsäuren, die in dem erfindungsgemäß eingesetzten Glycerintriester vorliegen sind Undecylensäure (C₁₀H₁₉COOH), Palmitoleinsäure (C₁₅H₂₉COOH), Ölsäure (C₁₇H₃₃COOH), Elaidinsäure (C₁₇H₃₃COOH), Vaccensäure (C₁₇H₃₃COOH), Icosensäure (C₁₉H₃₉COOH), Cetoleinsäure (C₂₁H₄₁COOH), Erucasäure (C₂₁H₄₁COOH), Nervonsäure (C₂₃H₄₇COOH), Linolsäure (C₁₇H₃₁COOH), Linolensäure (C₁₇H₂₉COOH), Arachidonsäure (C₁₉H₃₁COOH), Timnodonsäure (C₁₉H₂₉COOH), Clupanodonsäure (C₂₁H₃₃COOH) und Cervonsäure (C₂₁H₃₁COOH).

### Komponente B:

Im Monoester einer Fettsäure mit einem mehrwertigen Alkohol ist eine Hydroxyfunktionalität des mehrwertigen Alkohols mit einer Fettsäure verestert. In Komponente B können die gleichen Fettsäuren verwendet werden, die für Komponente A genannt worden sind. Bevorzugt liegen in Komponente B gesättigte Fettsäuren vor. Besonders bevorzugt liegt als Fettsäure Stearinsäure vor. In Komponente B können mehrwertige Alkohole eingesetzt werden, die wenigstens zwei Hydroxyfunktionalitäten aufweisen. Von den Hydroxyfunktionalitäten ist eine mit der Fettsäure verestert, während wenigstens eine weitere als freie Hydroxyfunktionalität vorliegt. Geeignete mehrwertige Alkohole sind die bezüglich Komponente A genannten. Besonders bevorzugt liegt in Komponente B Glycerin als mehrwertiger Alkohol vor. Somit wird in einer besonders bevorzugten Ausführungsform Glycerinmonostearat als Komponente B eingesetzt. Monoester von Glycerin können nach dem Fachmann bekannten Methoden hergestellt werden, beispielsweise durch sauer oder basisch katalysierte Umsetzung der entsprechenden Menge Fettsäure mit Glycerin.

### Komponente C:

Als Komponente C liegt in dem erfindungsgemäßen Hydrophobierungsmittel wenigstens ein Metallsalz einer Fettsäure vor. Geeignete Metalle sind ausgewählt aus der Gruppe bestehend aus Calcium, Magnesium, Aluminium, Zink, Barium und Mischungen davon. Bevorzugt wird ein Salz des Metalls Zink eingesetzt. Bezüglich der bevorzugten Fettsäuren gilt das zu Komponente A Gesagte. Bevorzugt wird eine gesättigte Fettsäure eingesetzt, besonders bevorzugt wird Stearinsäure eingesetzt. Ganz besonders bevorzugt wird somit Zinkstearat als Komponente C eingesetzt. Zinkstearat ist kommerziell erhältlich oder beispielsweise durch Umsetzung von Stearinsäure bzw. entsprechender Metallstearate mit geeigneten Zinksalzen zugänglich.

### Komponente D:

Als Komponente D wird in dem erfindungsgemäßen Hydrophobierungsmittel wenigstens ein hydrophiles oder hydrophobes Silicat eingesetzt. Als hydrophile Silicate eignen sich neben den in Nassverfahren hergestellten Kieselgelen und Fällungskieselsäuren insbesondere die pyrogenen Kieselsäuren. In einer bevorzugten Ausführungsform wird ein hydrophobes Kieselgel eingesetzt. Geeignete hydrophobe Silicate können z.B. aus hydrophilen Kieselsäuren durch Nachbehandlung mit Hydrophobierungsmitteln erhalten werden. Solche Silicate sind kommerziell erhältlich oder nach dem Fachmann bekannten Verfahren zugänglich.

In einer besonders bevorzugten Ausführungsform enthält das erfindungsgemäße Hydrophobierungsmittel Glycerintristearat, Glycerinmonostearat, Zinkstearat und wenigstens ein Silicat in den oben genannten Mengen. Daher betrifft die vorliegende Erfindung in einer ganz besonders bevorzugten Ausführungsform ein erfindungsgemäßes Styrolpolymerisat, wobei das Hydrophobierungsmittel
20 bis 60 Gew.-% Glycerintristearat als Komponente A,
5 bis 40 Gew.-% Glycerinmonostearat als Komponente B,
30 bis 55 Gew.-% Zinkstearat als Komponente C und
5 bis 30 Gew.-% wenigstens eines, bevorzugt hydrophoben, Silicats als Komponente D
enthält, und die Summe der Komponenten A bis D des Hydrophobierungsmittels 100 Gew.-% beträgt.

Die vorliegende Erfindung betrifft auch ein Verfahren zur Herstellung des erfindungsgemäßen expandierbaren Styrolpolymerisates durch Beschichten eines expandierbaren Styrolpolymerisates, welches athermane Partikel enthält, mit einem Hydrophobierungsmittel, welches die oben genannte Zusammensetzung aufweist. Das Beschichten des expandierbaren Styrolpolymerisates kann beispielsweise nach der in WO 06/082232 A1 offenbarten Methode geschehen. Gemäß diesem Dokument werden expandierbare Styrolpolymerisate durch die Schritte a) Erzeugen einer Schmelze des Polymerisates, b) Mischen mit einem Treibmittel, c) Kühlen der Mischung und d) Granulieren der so erhaltenen festen Mischung erhalten. Die Beschichtung des Styrolpolymerisates erfolgt dann durch in Wasser lösliche, emulgierbare oder suspendierbare Beschichtungsmittel im Granulator. Die EPS-Granulate werden bevorzugt mit 0,001 bis 5 Gew.-%, bevorzugt 0,01 bis 0,5 Gew.-%, besonders bevorzugt 0,01 bis 0,4 Gew.-%, jeweils bezogen auf den Feststoff, mit Beschichtungsmittel beschichtet. Die aufgebrachte Menge des Beschichtungsmittels kann z.B. über die Konzentration im Wasserkreislauf eingestellt werden. Das Beschichtungsmittel wird im Wasserkreislauf des Unterwassergranulators in der Regel in Mengen im Bereich von 0,05 bis 20 Gew.-%, bevorzugt im Bereich von 0,1 bis 10 Gew.-%, bezogen auf den Feststoffgehalt im Wasser, eingesetzt. Für eine konstante Beschichtungsqualität sollte die Konzen-tration des Beschichtungsmittels im Kreislaufwasser konstant gehalten werden, beispielsweise über eine konstante Dosierung des Beschichtungsmittels entsprechend dem Austrag über das beschichtete EPS.

Die wässrige Emulsion des Hydrophobierungsmittels wird vorzugsweise auf die EPS-Partikel unmittelbar nach der Aufarbeitung und Trocknung, beispielsweise im Granulierungsschritt aufgebracht.

In einer weiteren bevorzugten Ausführungsform wird das Hydrophobierungsmittel in Substanz auf die EPS-Partikel aufgebracht. Dazu werden EPS-Partikel mit einem entsprechenden Beschichtungsmittel intensiv gemischt, beispielsweise in einem Trommel- oder Schaufelmischer.

In einer weiteren bevorzugten Ausführungsform kann man das Hydrophobierungsmittel auch bei der Herstellung der EPS-Partikel durch Polymerisation von Styrol und gegebenenfalls weiteren Comonomeren in wässriger Suspension zusetzen.

Nach der Behandlung der EPS-Partikel mit den Hydrophobierungsmitteln werden die Partikel getrocknet. Das geschieht üblicherweise mit Luft bei Raumtemperatur oder leicht erhöhter Temperatur, die jedoch bei der Behandlung von unverschäumten Partikeln soweit unterhalb ihrer Erweichungstemperatur liegen muss, dass ein unbeabsichtigtes Aufschäumen und/oder ein Entweichen des Treibmittels verhindert werden. Die EPS-Partikel weisen im Allgemeinen eine mittlere Partikelgröße von 0,1 bis 3 mm, insbesondere von 0,2 bis 2,5 mm auf.

Die erfindungsgemäßen EPS-Partikel können zu Schaumstoffen mit Dichten von 5 bis 80 g/l, bevorzugt von 10 bis 70 g/l und insbesondere von 15 bis 60 g/l, verarbeitet werden.

Die vorliegende Erfindung betrifft auch ein Verfahren zur Herstellung von Schaumstoffen durch Herstellen von expandierbaren Styrolpolymerisaten, welche mit dem erfindunsgemäßen Beschichtungsmittel beschichtet sind, durch das erfindungsgemäße Verfahren und Aufschäumen dieser expandierbaren Styrolpolymerisate.

Die Verschäumung der Treibmittel enthaltenden EPS-Partikel zu Schaumstoffen erfolgt üblicherweise ebenfalls nach dem im Stand der Technik bekannten Verfahren, indem sie zunächst mit Wasserdampf in offenen oder geschlossenen Vorschäumern vorgeschäumt werden. Die vorgeschäumten Perlen werden danach in gasdurchlässigen Formen mittels Wasserdampf zu Formteilen oder Platten verschweißt. Die expandierten Polystyrolpartikel weisen im Allgemeinen eine mittlere Partikelgröße von 1 bis 10 mm, insbesondere von 2 bis 8 mm auf.

Überraschenderweise kommt es durch die erfindungsgemäße Behandlung mit dem Hydrophobierungsmittel zu keinerlei Nachteilen bei den mechanischen und den Verarbeitungseigenschaften der Styrolpolymerisate. Es tritt auch keine Erhöhung der Entformzeiten auf.

Die aus den erfindungsgemäßen expandierbaren Styrolpolymerisaten hergestellten Schaumstoffe zeichnen sich durch eine hervorragende Wärmeisolierung aus. Des Weiteren nehmen aus den erfindungsgemäßen EPS-Partikeln hergestellte Schäume nur sehr wenig Wasser auf. Ein weiterer Vorteil der erfindungsgemäßen EPS-Partikel besteht darin, dass aus ihnen hergestellte Vorschäume eine sehr geringe Verklebungsneigung aufweisen. Dadurch kann bei der Herstellung von vorgeschäumten Partikeln der Verfahrensschritt des Abtrennens von agglomerierten Partikeln entfallen, und es kommt erfindungsgemäß nicht zu einem Verlust an vorgeschäumten Partikeln.

Die vorliegende Erfindung betrifft auch Schaumstoffe, welche aus den erfindungsgemäßen expandierbaren Styrolpolymerisaten hergestellt werden.

Die vorliegende Erfindung betrifft auch die Verwendung eines Hydrophobierungsmittels, welches die oben definierte Zusammensetzung aufweist, zur Beschichtung von expandierbaren, athermane Partikel enthaltenden Styrolpolymerisaten.

Des Weiteren betrifft die vorliegende Erfindung die Verwendung eines Hydrophobierungsmittels, welches die oben definierte Zusammensetzung aufweist, zur Erniedrigung der Wasseraufnahme eines aus dem expandierbaren Styrolpolymerisat hergestellten Schaumstoffes.

Die vorliegende Erfindung betrifft auch die Verwendung des erfindungsgemäßen Schaumstoffes zur Wärmedämmung, beispielsweise von Gebäuden oder Gebäudeteilen, die so genannte Perimeterdämmung. Dabei können die erfindungsgemäßen Schaumstoffe auf der Außen- als auch auf der Innenseite der zu dämmenden Teile aufgebracht werden.

Die vorliegende Erfindung betrifft auch die Verwendung des erfindungsgemäßen Schaumstoffes zur thermischen Isolierung von Maschinen und Haushaltsgeräten, beispielsweise Backöfen, Kühlschränken, Gefriertruhen, Warmwasserbereitern oder Isolierkannen.

Die vorliegende Erfindung betrifft auch die Verwendung des erfindungsgemäßen Schaumstoffes als Verpackungsmaterial. Dabei kann der Schaumstoff teilchenförmig verwendet werden, so dass der zu verpackende Gegenstand in einer losen Schüttung liegt. Es ist auch möglich, dass aus dem erfindungsgemäßen Schaumstoff ein einteiliges Werkstück hergestellt wird, in das der zu verpackende Gegenstand eingebettet wird.

### Beispiele

### Beispiel 1 (erfindungsgemäß):

In einem Schaufelmischer werden EPS-Partikel mit einem Durchmesser von 0,5 bis 0,8 mm, welche 3,6 Gew.-% Graphit mit einer Partikelgröße von 5 µm enthalten, mit dem erfindungsgemäßen Beschichtungsmittel intensiv gemischt. Die Gesamtmenge an Hydrophobierungsmittel bezüglich der EPS-Partikel beträgt 0,3 Gew.-%. Das Beschichtungsmittel hat die folgende Zusammensetzung:
30 Gew.-% Glycerintristearat als Komponente A
10 Gew.-% Glycerinmonostearat als Komponente B
50 Gew.-% Zinkstearat als Komponente C und
10 Gew.-% hydrophobes Silicat als Komponente D.

Das eingesetzte hydrophobe Silicat ist ein Umsetzungsprodukt von Dichlordimethylsilan und Siliciumdioxid.

Die beschichteten EPS-Partikel werden in einem kontinuierlichen Vorschäumer expandiert. Durch Sieben werden agglomerierte, d.h. verklebte, Partikel abgetrennt. Der Gewichtsanteil der verklebten Partikel beträgt 0,1%.

Nach der Siebung werden die erhaltenen Schaumstoffpartikel zu plattenförmigen Formteilen mit einer Dichte von 30 g/l verschweißt. An daraus zugeschnittenen Formkörpern wird die Wasseraufnahme nach Unterwasserlagerung gemäß EN 12087 geprüft. Die Wasseraufnahme nach 28 Tagen beträgt 0,44 Vol.%.

### Vergleichsbeispiel 1:

Die Herstellung, Beschichtung, Verarbeitung und Prüfung erfolgt wie in Beispiel 1.

Als Beschichtungsmittel wird eine Mischung aus
90 Gew.-% Glycerintristearat als Komponente A
5 Gew.-% Glycerinmonostearat als Komponente B und
5 Gew.-% Zinkstearat als Komponente C
verwendet. In der Vergleichsmischung ist kein Silicat vorhanden.

Der Gewichtsanteil an verklebten Partikeln, welche nach dem Vorschäumen abgetrennt werden müssen, beträgt 11,2 Gew.-%. Die Wasseraufnahme nach 28 Tagen beträgt 0,35 Vol.%, gemessen nach EN 12087.

### Vergleichsbeispiel 2:

In einem Schaufelmischer mit einem Volumen von 40 I werden 25 kg EPS (Perlgröße 0.4 - 0,7 mm, Pentangehalt 6,1%), das keine athermanen Partikel enthält, mit einem Beschichtungsmittel, welches, jeweils bezogen auf das EPS,
0,25 Gew.-% Glycerinmonostearat (entspricht 50 Gew.-%, bezogen auf die Mischung),
0,13 Gew.-% Zinkstearat (entspricht 26 Gew.-%, bezogen auf die Mischung) und
0,12 Gew.-% feinteilige Kieselsäure (Fa. Degussa) (entspricht 24 Gew.-%, bezogen auf die Mischung)
enthält 10 min bei 25 °C intensiv gemischt. Dieses Beschichtungsmittel enthält kein Glycerintristearat. Anschließend werden die beschichteten Perlen in einem drucklosen Schäumkasten (System Rauscher) vorgeschäumt und nach 12 Stunden zu plattenförmigen Formteilen (Raumgewicht 20 kg/m³) verarbeitet.

Die Wasserdichtigkeit wird nach folgender Methode gemessen: Auf eine Schaumstoffplatte einer Dicke von 100 mm wird ein Rohr von 100 mm Durchmesser geklebt und mit einer Wassersäule von 100 mm Höhe gefüllt. Nach 24 Stunden wird geprüft, ob auf der Unterseite der Schaumstoffplatte ein Wasseraustritt zu beobachten ist. Das Absenken des Wasserspiegels wird in mm Wassersäule gemessen. Vor dem Versuch wird die Schaumstoffplatte 24 Stunden im Trockenschrank bei 60 °C konditioniert. Danach werden die Rohre mittels Silikonkautschuk aufgeklebt.

Die Schaumstoffplatte gemäß Vergleichsbeispiel 2 zeigt eine unzureichende Wasserdichtigkeit von 28 mm. Zusätzlich wird die Wasseraufnahme der Schaumstoffplatte nach DIN 53433 gemessen. Die Wasseraufnahme beträgt 5,8 Vol.%.

### Vergleichsbeispiel 3:

Die Versuchsdurchführung entspricht Vergleichsversuch 2. Es wird ein Beschichtungsmittel aus, jeweils bezogen auf das EPS,
0,32 Gew.-% Glycerintristearat (entspricht 64 Gew.-%, bezogen auf die Mischung),
0,1 Gew.-% feinteilige Kieselsäure (entspricht 20 Gew.-%, bezogen auf die Mischung) und
0,08 Gew.-% Zinkstearat (entspricht 16 Gew.-%, bezogen auf die Mischung)
verwendet. Dieses Beschichtungsmittel enthält kein Glycerinmonostearat. Die erhaltenen Schaumstoffplatten sind nicht wasserdicht.

Das erfindungsgemäße Beispiel und die drei Vergleichsbeispiele zeigen, dass erst die erfindungsgemäße Kombination der Komponenten A bis D bewirkt, dass damit hergestellte EPS-Partikel beim Vorschäumen nicht verkleben, und daraus hergestellte Schaumstoffe besonders wenig Wasser aufnehmen.

## Patentansprüche

1. Expandierbares Styrolpolymerisat, welches athermane Partikel enthält und mit einem Hydrophobierungsmittel beschichtet ist, **dadurch gekennzeichnet, dass** das Hydrophobierungsmittel
10 bis 90 Gew.-% wenigstens eines Triesters wenigstens einer Fettsäure mit einem mehrwertigen Alkohol als Komponente A,
5 bis 70 Gew.-% wenigstens eines Monoesters einer Fettsäure mit einem mehrwertigen Alkohol als Komponente B,
30 bis 55 Gew.-% wenigstens eines Metallsalzes einer Fettsäure als Komponente C und
5 bis 50 Gew.-% wenigstens eines Silicats als Komponente D
enthalt, wobei die Summe der Komponenten A bis D des Hydrophobierungsmittels 100 Gew.-% beträgt.

2. Styrolpolymerisat nach Anspruch 1, **dadurch gekennzeichnet, dass** das Silicat ein hydrophobes Silicat ist.

3. Styrolpolymerisat nach Anspruch 1 oder 2, **dadurch gekennzeichnet, dass** athermane Partikel in einer Menge von 0,05 bis 8 Gew.-%, bezogen auf das Styrolpolymerisat, vorliegen.

4. Styrolpolymerisat nach einem der Ansprüche 1 bis 3, **dadurch gekennzeichnet, dass** das Hydrophobierungsmittel in einer Menge von 0,001 bis 0,5 Gew.-%, bezogen auf das Styrolpolymerisat, vorliegt.

5. Styrolpolymerisat nach einem der Ansprüche 1 bis 4, **dadurch gekennzeichnet, dass** es ein Styrolhomopolymer oder ein Styrolcopolymer mit bis zu 20 Gew.-%, bezogen auf das Gewicht des Polymers, wenigstens eines weiteren ethylenisch ungesättigten Monomers ist.

6. Styrolpolymerisat nach einem der Ansprüche 1 bis 5, **dadurch gekennzeichnet, dass** die athermanen Partikel ausgewählt sind aus der Gruppe bestehend aus Graphit, Russ, Aluminium und Mischungen davon.

7. Styrolpolymerisat nach einem der Ansprüche 1 bis 6, **dadurch gekennzeichnet, dass** das Hydrophobierungsmittel
20 bis 60 Gew.-% Glycerintristearat als Komponente A,
5 bis 50 Gew.-% Glycerinmonostearat als Komponente B,
30 bis 55 Gew.-% Zinkstearat als Komponenten C und
5 bis 30 Gew.-% wenigstens eines Silicats als Komponente D
enthält, wobei die Summe der Komponenten A bis D des Hydrophobierungsmittels 100 Gew.-% beträgt.

8. Verfahren zur Herstellung von expandierbarem Styrolpolymerisat, durch Beschichten eines expandierbaren Styrolpolymerisates, welches athermane Partikel enthält, mit einem Hydrophobierungsmittel, **dadurch gekennzeichnet, dass** das Hydrophobierungsmittel die in Anspruch 1 definierte Zusammensetzung aufweist.

9. Schaumstoff, hergestellt aus dem expandierbaren Styrolpolymerisat nach einem der Ansprüche 1 bis 7.

10. Verfahren zur Herstellung von Schaumstoffen nach Anspruch 9 durch Herstellen von expandierbaren Styrolpolymerisaten nach dem Verfahren gemäß Anspruch 8 und Aufschäumen dieser expandierbaren Styrolpolymerisate.

11. Verwendung eines Hydrophobierungsmittels, welches die in Anspruch 1 definierte Zusammensetzung aufweist, zur Beschichtung von expandierbaren, athermane Partikel enthaltenden Styrolpolymerisaten.

12. Verwendung eines Hydrophobierungsmittels, welches die in Anspruch 1 definierte Zusammensetzung aufweist, zur Erniedrigung der Wasseraufnahme eines Schaumstoffes, hergestellt aus expandierbarem Styrolpolymerisat.

13. Verwendung eines Schaumstoffes nach Anspruch 9 zur Wärmedämmung.

14. Verwendung eines Schaumstoffes nach Anspruch 9 zur thermischen Isolierung von Maschinen und Haushaltsgeräten.

15. Verwendung eines Schaumstoffes nach Anspruch 9 als Verpackungsmaterial.

## Claims

1. An expandable styrene polymer which comprises athermanous particles and has been coated with a hydrophobicizing agent, which comprises
from 10 to 90% by weight of at least one triester of at least one fatty acid with a polyhydric alcohol, as component A,
from 5 to 70% by weight of at least one monoester of a fatty acid with a polyhydric alcohol, as component B,
from 30 to 55% by weight of at least one metal salt of a fatty acid, as component C, and
from 5 to 50% by weight of at least one silicate, as component D,
where the entirety of components A to D of the hydrophobicizing agent amounts to 100% by weight.

2. The styrene polymer according to claim 1, wherein the silicate is a hydrophobic silicate.

3. The styrene polymer according to claim 1 or 2, wherein the amount present of the athermanous particles is from 0.05 to 8% by weight, based on the styrene polymer.

4. The styrene polymer according to any of claims 1 to 3, wherein the amount present of the hydrophobicizing agent is from 0.001 to 0.5% by weight, based on the styrene polymer.

5. The styrene polymer according to any of claims 1 to 4, which is a styrene homopolymer or a styrene copolymer having up to 20% by weight, based on the weight of the polymer, of at least one further ethylenically unsaturated monomer.

6. The styrene polymer according to any of claims 1 to 5, wherein the athermanous particles have been selected from the group consisting of graphite, carbon black, aluminum, and mixtures thereof.

7. The styrene polymer according to any of claims 1 to 6, wherein the hydrophobicizing agent comprises
from 20 to 60% by weight of glycerol tristearate, as component A,
from 5 to 50% by weight of glycerol monostearate, as component B,
from 30 to 55% by weight of zinc stearate, as component C, and
from 5 to 30% by weight of at least one silicate, as component D,
where the entirety of components A to D of the hydrophobicizing agent amounts to 100% by weight.

8. A process for preparation of expandable styrene polymer, via coating of an expandable styrene polymer, which comprises athermanous particles, with a hydrophobicizing agent, which comprises using the constitution defined in claim 1 for the hydrophobicizing agent.

9. A foam, produced from the expandable styrene polymer according to any of claims 1 to 7.

10. A process for production of foams according to claim 9 via preparation of expandable styrene polymers, by the process according to claim 8, and foaming of these expandable styrene polymers.

11. The use of a hydrophobicizing agent which has the constitution defined in claim 1 for coating of expandable styrene polymers comprising athermanous particles.

12. The use of a hydrophobicizing agent which has the constitution defined in claim 1 for lowering the water absorption of a foam produced from expandable styrene polymer.

13. The use of a foam according to claim 9 for thermal insulation.

14. The use of a foam according to claim 9 for thermal insulation of machines and of household devices.

15. The use of a foam according to claim 9 as packaging material.

## Revendications

1. Polymérisat de styrène expansible, qui contient des particules athermanes et est enrobé avec un agent d'hydrophobie, **caractérisé en ce que** l'agent d'hydrophobie contient
10 à 90 % en poids d'au moins un triester d'au moins un acide gras avec un alcool plurivalent en tant que composant A,
5 à 70 % en poids d'au moins un monoester d'un acide gras avec un alcool plurivalent en tant que composant B,
30 à 55 % en poids d'au moins un sel métallique d'un acide gras en tant que composant C et
5 à 50 % en poids d'au moins un silicate en tant que composant D,
la somme des composants A à D de l'agent d'hydrophobie étant égale à 100 % en poids.

2. Polymérisat de styrène selon la revendication 1, **caractérisé en ce que** le silicate est un silicate hydrophobe.

3. Polymérisat de styrène selon la revendication 1 ou 2, **caractérisé en ce que** les particules athermanes sont présentes en une quantité de 0,05 à 8 % en poids, par rapport au polymérisat de styrène.

4. Polymérisat de styrène selon l'une quelconque des revendications 1 à 3, **caractérisé en ce que** l'agent d'hydrophobie est présent en une quantité de 0,001 à 0,5 % en poids, par rapport au polymérisat de styrène.

5. Polymérisat de styrène selon l'une quelconque des revendications 1 à 4, **caractérisé en ce qu'**il s'agit d'un homopolymère de styrène ou d'un copolymère de styrène avec jusqu'à 20 % en poids, par rapport au poids du polymère, d'au moins un autre monomère à insaturation éthylénique.

6. Polymérisat de styrène selon l'une quelconque des revendications 1 à 5, **caractérisé en ce que** les particules athermanes sont choisies dans le groupe consistant en graphite, noir de carbone, aluminium et des mélanges de ceux-ci.

7. Polymérisat de styrène selon l'une quelconque des revendications 1 à 6, **caractérisé en ce que** l'agent d'hydrophobie contient
20 à 60 % en poids de tristéarate de glycérol en tant que composant A,
5 à 50 % en poids de monostéarate de glycérol en tant que composant B,
30 à 55 % en poids de stéarate de zinc en tant que composant C et
5 à 30 % en poids d'au moins un silicate en tant que composant D,
la somme des composants A à D de l'agent d'hydrophobie étant égale à 100 % en poids.

8. Procédé pour la préparation de polymérisat de styrène expansible, par enrobage d'un polymérisat de styrène expansible, qui contient des particules athermanes, avec un agent d'hydrophobie, **caractérisé en ce que** l'agent d'hydrophobie a la composition définie dans la revendication 1.

9. Mousse, produite à partir du polymérisat de styrène expansible selon l'une quelconque des revendications 1 à 7.

10. Procédé pour la production de mousses selon la revendication 9, par préparation de polymérisats de styrène expansibles conformément au procédé selon la revendication 8 et expansion de ces polymérisats de styrène expansibles.

11. Utilisation d'un agent d'hydrophobie, qui a la composition définie dans la revendication 1, pour l'enrobage de polymérisats de styrène expansibles contenant des particules athermanes.

12. Utilisation d'un agent d'hydrophobie, qui a la composition définie dans la revendication 1, pour réduire l'absorption d'eau par une mousse produite à partir de polymérisat de styrène expansible.

13. Utilisation d'une mousse selon la revendication 9, pour l'isolation thermique.

14. Utilisation d'une mousse selon la revendication 9, pour l'isolation thermique de machines et d'appareils ménagers.

15. Utilisation d'une mousse selon la revendication 9, en tant que matériau d'emballage.
